# EUROPEAN PATENT APPLICATION

(11) **EP 4 822 980 A2**
(43) Date of publication of application: **14.10.2026**
(21) Application number: 26160659.4
(22) Date of filing: 25.02.2026
(51) Int. Cl.: H02P 6/15, B25F 5/00

(54) **FIELD-ORIENTED-CONTROL FOR POWER TOOLS**

(30) Priority: 25.02.2025 US 202563762871 P
(71) Applicant: Milwaukee Electric Tool Corporation, Brookfield, WI 53005 (US)
(72) Inventor: Strandt, Andrew P., Brookfield, WI 53005 (US); Fieldbinder, Douglas R., Brookfield, WI 53005 (US); Truettner, Donald J., Brookfield, WI 53005 (US); Obermann, Timothy R., Brookfield, WI 53005 (US)
(74) Representative: Grünecker Patent- und Rechtsanwälte PartG mbB

(57) **Abstract**

A power tool including a motor and a power input. The power tool also including a power switching network electrically connected between the power input and the motor and a controller electrically connected to the power switching network. The power switching network includes a plurality of Wide Bandgap Semiconductors (WBS) field effect transistors (FETs). The controller is configured to determine a motor speed of the motor; and generate pulse-width modulated (PWM) signals for the power switching network using field-oriented control (FOC) based on the motor speed. The PWM signals include a switching frequency greater than or equal to 50 kHz.

## Description

### CROSS-REFERENCE TO RELATED APPLICATIONS

This application claims priority to U.S. Provisional Application No. 63/762,871, filed February 25, 2025, the entire contents of which are herein incorporated by reference.

### FIELD OF DISCLOSURE

The present disclosure relates to a motor drive for a power tool.

### SUMMARY

Unlike in brushed motors, a position of the rotor may be determined to control operation of a brushless direct current (BLDC) motor or a permanent magnet synchronous motor (PMSM). For example, systems may use a sensor (e.g., Hall sensor), encoders (e.g., rotary encoders), or a sensorless technique to detect the position of the magnets in the rotor and, thereby, control the timing of the drive signals to the power switching elements. BLDC motor and PMSM motor controllers use the position of the motor to generate a PWM scheme to drive a power switching network and the motor. The PWM scheme used to drive the motor varies based on the technique (e.g., block commutation, field-oriented control, etc.).

Metal-oxide-semiconductor field effect transistors (MOSFETs) have been used as the switches forming the power switching network for a power tool. MOSFETS operate at a low frequency, for example, 20 kHz, and the like within a human audible perception range. MOSFETs suffer with other drawbacks, for example, slow response times, power loss due to high on-state resistance, and the like. The high on-state resistance of MOSFETs may also generate heat during operation of the power tool when current is passed through the MOSFETs. The heat may need to be dissipated using larger heat sinks resulting in a larger form factor for the power tool and increasing challenges in the design of the power tools.

Unlike MOSFETs, wide bandgap semiconductor (WBS) field effect transistors FETs (e.g., Gallium Nitride (GaN FETs), Silicon Carbide (SiC FETs), or the like) can operate at high switching frequencies, such as, 100 kHz, 200 kHz, 400 kHz, and the like, due to their composition. Compared to MOSFETs, WBS FETs have faster response times and reduced power loss due to low on-state resistance. WBS FETs can therefore be operated at frequencies outside of the human audible perception range. Additionally, WBS FETs also produce less heat during operation due to the low on-state resistance compared to MOSFETs. Use of WBS FETs also allows for smoother control of the motor using a field-oriented control (FOC) scheme compared to MOSFETs.

In some aspects, the techniques described herein relate to a power tool including: a motor; a power input; a power switching network electrically connected between the power input and the motor, the power switching network including a plurality of Wide Bandgap Semiconductors (WBS) field effect transistors (FETs); and a controller electrically connected to the power switching network and configured to determine a speed of the motor; and generate pulse-width modulated (PWM) signals for the power switching network using field oriented control (FOC) based on the speed of the motor, wherein the PWM signals include a switching frequency of at least 50 kHz.

In some aspects, the techniques described herein relate to a method for controlling a motor of a power tool, the method including: determining, using a controller of the power tool, a speed of the motor; and generating, using the controller, pulse-width modulated (PWM) signals from field oriented control (FOC) based on the speed of the motor for a power switching network electrically connected between a power input of the power tool and the motor, the power switching network including a plurality of Wide Bandgap Semiconductors (WBS) field effect transistors (FETs), wherein the PWM signals include a switching frequency greater than 50 kHz.

In some aspects, the techniques described herein relate to a power tool including; a power input; a variable speed trigger; a motor including a speed sensor; a power switching network electrically connected between the power input and the power output and including a plurality of Gallium Nitride (GaN) High Electron Mobility Transistors (HEMTs); and a controller electronically connected to the power switching network and configured to receive, via the variable speed trigger, a speed command; determine, using the speed sensor, the speed of the motor; and generate pulse-width modulated (PWM) signals for the power switching network from field oriented control (FOC) based on a speed error between the speed command and the speed of the motor, wherein the PWM signals include a switching frequency of at least 50 kHz.

Other aspects of the disclosure will become apparent by consideration of the detailed description and accompanying drawings.

### BRIEF DESCRIPTION OF THE DRAWINGS

FIG. 1 is a perspective view of a power tool, according to some embodiments.
FIG. 2 illustrates a battery pack, according to some embodiments.
FIG. 3 is a simplified block diagram of the power tool of FIG. 1, according to some embodiments.
FIG. 4 is a block diagram for a control system for a power switching network of the power tool of FIG. 1, according to some embodiments.
FIG. 5 illustrates a simplified block diagram of a controller topology for implementing the field-oriented control motor drive technique for the power tool of FIG. 1, according to some embodiments.
FIG. 6 is a flowchart of an example method for controlling a motor of the power tool of FIG. 1, according to some embodiments.

### DETAILED DESCRIPTION

Before any embodiments are explained in detail, it is to be understood that the embodiments are not limited in their application to the details of construction and the arrangement of components set forth in the following description or illustrated in the following drawings. The embodiments are capable of being practiced or of being carried out in various ways. Also, it is to be understood that the phraseology and terminology used herein is for the purpose of description and should not be regarded as limited. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting, and coupling. Further, "connected" and "coupled" are not restricted to physical or mechanical connections or couplings, and can include electrical connections or couplings, whether direct or indirect. Additionally, unless otherwise noted, terms of approximation, such as "about," approximately," and "substantially," at least when used with numerical values, may refer to within 1%, 2.5%, 5%, or 10% of the noted value.

Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Accordingly, in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively

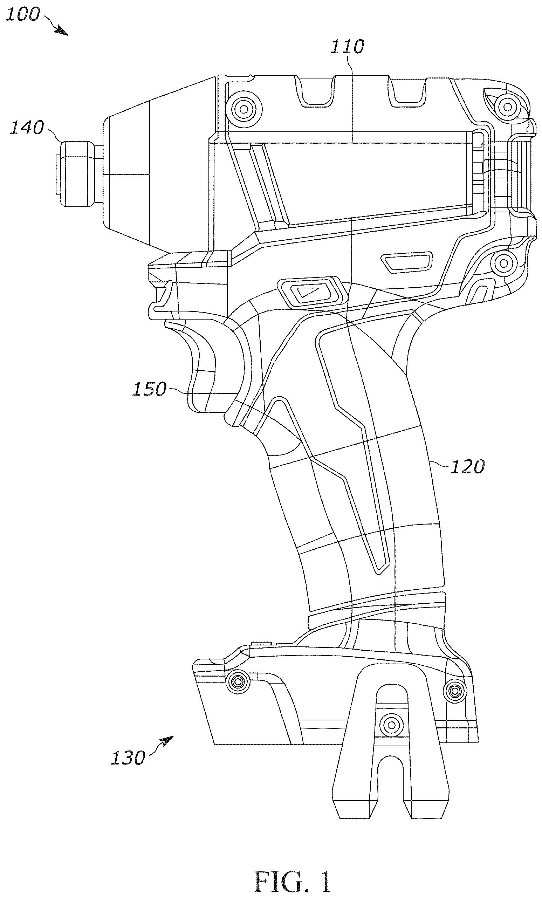

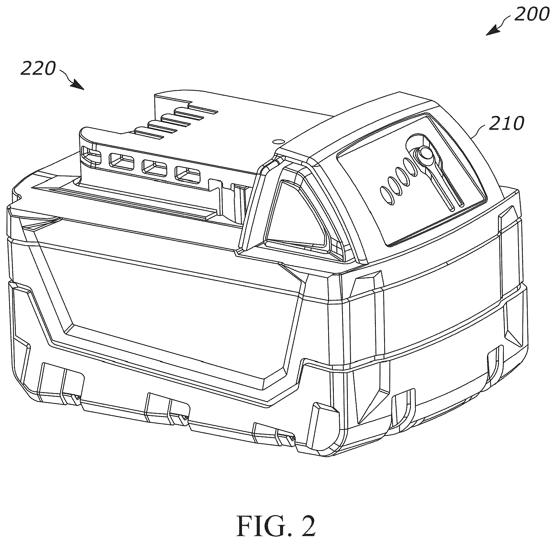

FIG. 1 illustrates one example embodiment of a power tool 100. The power tool 100 is, for example, an impact driver including an upper main body 110, a handle 120, a battery pack receiving portion 130, an output drive device 140, and an actuator 150. The housing of the power tool 100 (e.g., the main body 110 and the handle 120) is composed of durable and light- weight plastic material. The output drive device 140 is composed of a metal (e.g., steel) output spindle. The battery pack receiving portion 130 is configured to receive and couple to a battery pack, such as a battery pack 200 (FIG. 2) that provides power to the power tool 100. The battery pack receiving portion 130 includes a connecting structure to engage a mechanism that secures the battery pack 200 and a terminal block to electrically connect the battery pack 200 to the power tool 100.

FIG.1 illustrates an impact driver, however, the power tool 100 may include drills, circular saws, jig saws, band saws, reciprocating saws, screw drivers, angle grinders, straight grinders, hammers, multi-tools, rotary hammers, angle drills, powered ratchets, powered torque wrenches, hydraulic pulse tools, hydraulic tensioning tools, lock bolt installation tools, reaction arm tools, riveting tools, nailers, staplers, TC bolt guns, portable power source that converts battery power to AC output using an inventor, and the like.

FIG. 2 illustrates a battery pack 200, according to some embodiments. The battery pack 200 is a power tool battery pack that is generally used to power a power tool, such as the power tool 100. The battery pack 200 includes a housing 210 and an interface portion 220 for connecting the battery pack 200 to a device (e.g., the power tool 100). In some embodiments, the battery pack 200 includes lithium-ion battery cells. In other embodiments, the battery pack 200 may be of a different chemistry, for example, nickel-cadmium, nickel-metal hydride, and the like. In the illustrated embodiment, the battery pack 200 is an 18-volt battery pack. In other embodiments, the output voltage level of the battery pack 200 may be different. For example, the battery pack 200 can be a 4-volt battery pack, 28-volt battery pack, 36-volt battery pack, 72- volt battery pack or another voltage (voltage here may refer to nominal voltage). The battery pack 200 may also have various capacities (e.g., 3, 4, 5, 6, 8, or 12 ampere-hours).

The battery pack 200 also includes terminals to connect to the power tool 100. The terminals for the battery pack 200 include a positive terminal and a negative terminal to provide power to and from the battery pack 200. In some embodiments, the battery pack 200 also includes data terminals to communicate with the power tool 100. For example, the battery pack 200 may include a microcontroller to monitor one or more characteristics of the battery pack 200 and the data terminals may communicate with the power tool 100 regarding the monitored characteristics.

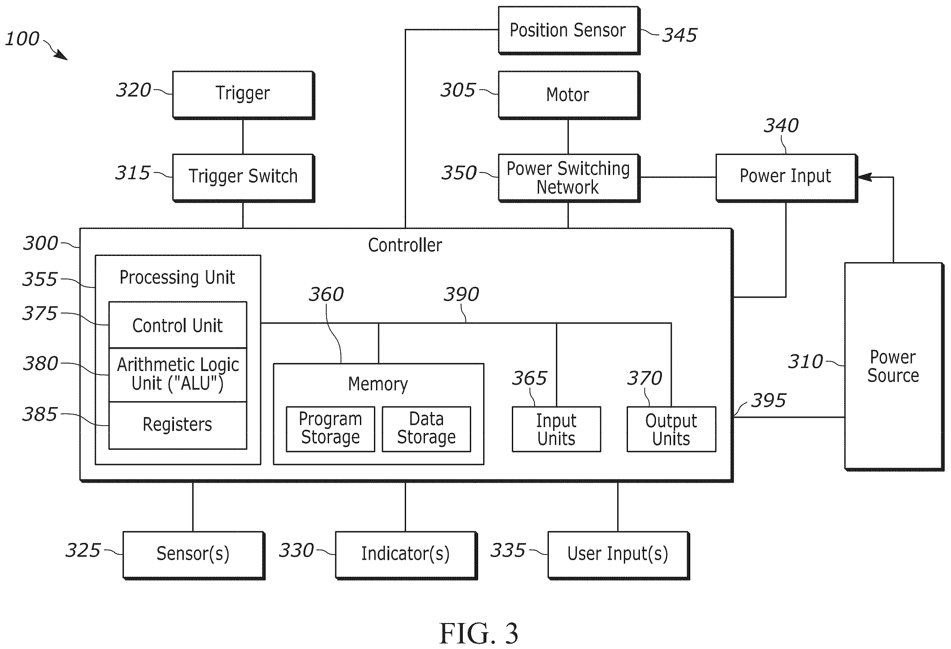

FIG. 3 is a simplified block diagram of a control system of the power tool 100 of FIG. 1, according to some embodiments. The control system includes a controller 300. The controller 300 is electrically and/or communicatively connected to a variety of modules or components of the power tool 100. For example, the illustrated controller 300 is electrically connected to a position sensor 345, a power source 310, a trigger switch 315 (connected to a trigger 320 - e.g., a variable speed trigger), one or more sensors or sensing circuits 325, one or more indicators 330, a user input module 335, a power input 340, a power switching network 350. The controller 300 includes combinations of hardware and software that are operable to, among other things, control the operation of the power tool 100, monitor the operation of the power tool 100 using, for example, the positions sensor 345 and the one or more sensors or sensing circuits, activate the one or more indicators 330 (e.g., an LED), and/or the like.

The controller 300 includes a plurality of electrical and electronic components that provide power, operational control, and protection to the components and modules within the controller 300 and/or the power tool 100. For example, the controller 300 includes, among other things, a processing unit 355 (e.g., a microprocessor, a microcontroller, or another suitable programmable device), a memory 360, input units 365, and output units 370. The processing unit 355 includes, among other things, a control unit 375, an ALU 380, and a plurality of registers 385 (shown as a group of registers in FIG. 3) and is implemented using a known computer architecture (e.g., a modified Harvard architecture, a von Neumann architecture, etc.). The processing unit 355, the memory 360, the input units 365, and the output units 370, as well as the various modules or circuits connected to the controller 300 are connected by one or more control and/or data buses (e.g., common bus 390). The control and/or data buses are shown generally in FIG. 3 for illustrative purposes. The use of one or more control and/or data buses for the interconnection between and communication among the various modules, circuits, and components would be known to a person skilled in the art.

The memory 360 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 355 is connected to the memory 360 and executes software instructions that are capable of being stored in a RAM of the memory 360 (e.g., during execution), a ROM of the memory 360 (e.g., on a generally permanent basis), or another non-transitory computer readable medium such as another memory or a disc. Software included in the implementation of the power tool 100 can be stored in the memory 360 of the controller 300. The software includes, for example, firmware, one or more applications, program data, filters, rules, one or more program modules, and other executable instructions. The controller 300 is configured to retrieve from the memory 360 and execute, among other things, instructions related to the control processes and methods described herein. In other constructions, the controller 300 includes additional, fewer, or different components.

In some embodiments, the power tool 100 includes a battery pack interface (not shown) including a combination of mechanical components (e.g., rails, grooves, latches, etc.) and electrical components (e.g., one or more terminals) configured to and operable for interfacing (e.g., mechanically, electrically, and communicatively connecting) the power tool 100 with the power source 310 (e.g., the battery pack 200). For example, power provided by the battery pack 200 to the power tool 100 is provided through the battery pack interface to the power input 340. The power input 340 includes combinations of active and passive components to regulate or control the power received from the battery pack 200 prior to power being provided to the controller 300. The battery pack interface also supplies power via the power input 340 to the power switching network 350 to provide power to the motor 305. The battery pack interface also includes, for example, a communication line 395 for providing a communication line or link between the controller 300 and the battery pack 200.

The indicators 330 include, for example, one or more light-emitting diodes ("LEDs"). The indicators 330 can be configured to display conditions of, or information associated with, the power tool 100. For example, the indicators 330 are configured to indicate measured electrical characteristics of the power tool 100, the status of the power tool 100, etc. The user input module 335 is operably coupled to the controller 300 to, for example, select a forward mode of operation or a reverse mode of operation, a torque and/or speed setting for the power tool 100 (e.g., using torque and/or speed switches), etc. In some embodiments, the user input module 335 includes a combination of digital and analog input or output devices required to achieve a desired level of operation for the power tool 100, such as one or more knobs, one or more dials, one or more switches, one or more buttons, etc. Although illustrated separately, the trigger switch 315 and/or the trigger 320 may be a part of the user input module 335.

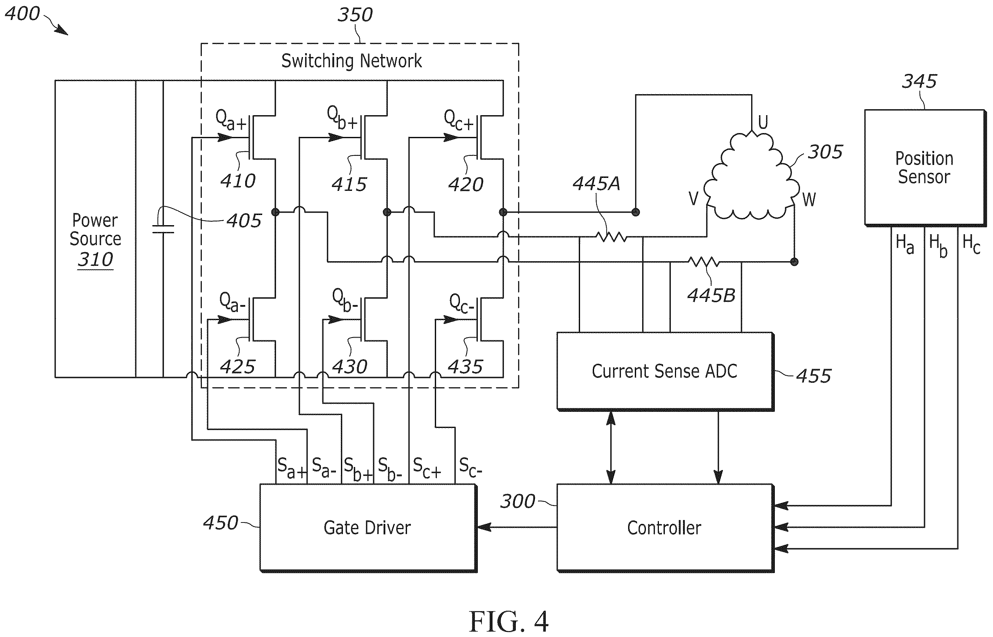

The power switching network 350 provides operating power to the motor 305 based on control signals from a motor controller, such as the controller 300. The power switching network 350 includes a plurality of electronic switches (e.g., FETs, bipolar junction transistors, and the like) connected to form a network that controls the activation of the motor 305 based on pulse-width modulated (PWM) signals. The power switching network 350 may be implemented as an inverter (e.g., a three-phase bridge as shown in FIG. 4, a two-phase bridge - e.g., an H- bridge, or the like). For instance, the power switching network 350 may receive PWM signals from the controller 300 to drive the motor 305. Generally, when the trigger 320 is depressed, electrical current is supplied from the power source 310 to the motor 305 via the power switching network 350. When the trigger 320 is not depressed, electrical current is not supplied from the power source 310 to the motor 305. For example, a trigger pull sensor senses the amount that the trigger 320 is pulled. In some examples, the output of the power switching network 350 is provided to an AC outlet to power an AC device.

The motor 305 may be energized based on a state of the trigger 320. Generally, when the trigger 320 is activated, the motor 305 is energized, and when the trigger 320 is deactivated, the motor 305 is de-energized. In the illustrated embodiment, the trigger 320 may be biased (e.g., with a biasing member such as a spring) such that the trigger 320 moves in a second direction away from the handle of the power tool 100 when the trigger 320 is released by the user. In some embodiments, the controller 300 determines a shutdown condition of the power tool 100 based on the trigger pull sensor. For example, the controller 300 may determine that the power tool 100 is no longer being operated based on a lack of input from the trigger pull sensor and/or a release of the trigger pull sensor for a predetermined amount of time. In some examples, the trigger 320 is a variable speed trigger such that the trigger switch 315 provides a signal to the controller 300 corresponding to the amount of trigger pull (e.g., the distance to which the trigger is pulled). This signal from the trigger switch 315 may be generated using, for example, a potentiometer, an inductive sensor, or the like, and provides a speed command (e.g., as a percentage of maximum speed).

The power switching network 350 is electrically connected to the motor 305. In some embodiments, the motor 305 is a brushless DC (BLDC) motor. In some embodiments, the motor 305 is a permanent magnet synchronous motor (PMSM). In some embodiments, the power source 310 is a battery pack, such as the battery pack 200. The power switching network 350 is also electrically and communicatively connected to the controller 300. One or more gate drivers 450 may also be provided between the controller 300 and the power switching network 350. In one example, a gate driver 450 may be integrated with the FETs of the power switching network 350. The one or more gate drivers 450 receive supply voltage from the power input and the control signals from the controller 300.

FIG. 4 is a simplified block diagram of a motor drive 400 of the power tool 100, according to some embodiments. In the example illustrated, the motor drive 400 includes the power switching network 350 in a three-phase inverter bridge configuration connected between the power source 310 and the motor 305. The power source 310 provides power to a power switching network 350. The power switching network 350 is comprised of three half bridges. Each half bridge is comprised of at least two wide bandgap semiconductor FETs (WBS FETs). In the example illustrated, the power switching network 350 includes Qa+ first high-side WBS FET 410, Qb+ second high-side WBS FET 415, Qc+ third high-side WBS FET 420, Qa- first low- side WBS FET 425, Qb- second low-side WBS FET 430, and Qc- third low-side WBS FET 435. In some examples, the high side consists of at least two WBS FETs in parallel. For example, the first high side may include three WBS FETs placed in parallel resulting in reducing the on-state resistance to one-third of the on-state resistance of a singular WBS FET.

In one example, the WBS FETs include Gallium Nitride FETs (GaN FETs), Silicon Carbide FETs (SiC FETs), or the like. In one example, the WBS FETs are high electron mobility transistors (HEMTs), e.g., enhancement mode HEMTs (E-HEMTs) and particularly GaN HEMTs or GaN E-HEMTs. WBS FETs have a bandgap in the range of, for example about 3-4 electron volts (eV). WBS FETs exhibit several properties that provide advantages compared to the traditional field effect transistors (FETs) (e.g., MOSFETs).

The WBS FET is, for example, a three-terminal device with a source (S), drain (D), and gate (G). The structure of the WBS FET may consist of a thin GaN layer sandwiched between two layers of AlGaN (Aluminum Gallium Nitride). For example, the GaN layer acts as a channel for electrons to flow from source (S) to drain (D). The AlGaN layer acts as a barrier, reducing the electron density in the channel, allowing for better control of electron flow. The GaN HEMT may be an enhancement mode transistor such that a gate voltage (or current) is applied to the device to create a conductive channel in the GaN layer for current to flow from source to drain. Switching a transistor refers to applying voltage (or current) to a gate to either activate or de-activate the conductive channel. The GaN HEMT has high electron mobility, that is, the electrons can move faster in the channel resulting in a higher current density than traditional silicon MOSFET devices.

The switching frequency of WBS FETs refers to the rate at which transistors may activate and de-activate. Particularly, WBS FETs can be operated at high frequencies, for example, at 100 kHz, 200 kHz, 400 kHz, and more while losing less energy as heat than MOSFETs operating at lower frequencies. WBS FETs have faster response times compared to traditional FETs. In some embodiments, GaN E-HEMTs may be used and operated at a switching frequency of at least 50 kHz. In one example, the WBS FETs are operated at a switching frequency of between 20 kHz and 100 kHz. In some examples, the WBS FETs may be operated at a switching frequency of up to 250 kHz, 400kHz or the like. Additionally, WBS FETs may be used with a low dead time, for example, less than 100 nanoseconds. Dead time may refer to the time gap between deactivating a first WBS FET and activating a second WBS FET of the power switching network 350.

The WBS FETs are operated at high frequencies to provide higher resolution signals at the input to the motor 305. Energy storage capacity can be reduced for the same total output power rating caused by the increased frequency during operation of the wide bandgap semiconductors compared to MOSFETs. Additionally, smaller heat sinks and fans can be used because the WBS FETs operate more efficiently than MOSFETs and therefore produce less heat during operation. Accordingly, the size and weight of the components within the power tool 100 can be reduced and efficiency of the power tool 100 can be improved by replacing MOSFETs with WBS FETs within the power switching network 350 and the controller 300.

The motor drive 400 includes a DC-link capacitor network 405 (e.g., one or more DC-link capacitors, or a plurality of DC-link capacitors) connected across the DC bus (i.e., between the positive input and the negative input to the power switching network 350). The use of WBS FETs instead of MOSFETs in the power switching network 350 permits reducing the capacitance of the DC-link capacitor network 405, also resulting in a lower sized DC-link capacitor network 405. In some examples, the electrolytic capacitors, typically used with MOSFETS, are replaced with ceramic capacitors. Ceramic capacitors have higher temperature ratings and lower losses compared to electrolytic capacitors. In one example, the ceramic capacitor is a multilayer ceramic capacitor (MLCC). The use of ceramic capacitors with WBS FETs allows for more power dense hardware designs. The motor drive 400 achieves significant size savings and better heat management when used in the power tool 100.

The half bridge WBS FETs are electrically connected to different phases of the motor 305. For example, WBS FETs 410 and 425 are connected to the W phase of the motor 305, WBS FETs 415 and 430 are connected to the V phase of the motor 305, and WBS FETs 420 and 435 are connected to the U phase of the motor 305. As the motor rotates the position sensor 345 communicates with the controller 300 such that the controller 300 can determine a rotational position of the motor 305. The position sensor 345 outputs position signals Ha, Hb, and Hc to the controller 300. In some embodiments, the position sensor 345 is a digital Hall effect sensor. In some other embodiments, the motor 305 is a sensorless motor and the rotor position may be detected by using various sensorless motor sensing techniques (e.g., BEMF detectors, etc.). In some embodiments, the position sensor 345 is an encoder, position-sensing integrated circuit, and the like.

One or more current sensors 445 are connected in the power path to detect a current in the power path. In the example illustrated, in FIG. 4, the power tool 100 includes a first current sensor 445A and a second current sensor 445B connected between the power switching network 350 and the motor 305 on two of the phase lines connecting the power switching network 350 to the motor 305 (e.g., phase sensing). In other examples, more or fewer current sensors 445 may be provided and may be connected at different locations in the power path. For example, a current sensor 445 may be provided on all three phase lines connecting the power switching network 350 to the motor 305. One or more current sensors 445 may be connected between the one or more of the low-side FETs 425, 430, 435 and the negative DC bus (e.g., single or three low-side shunt sensing). A current sensor 445 may be provided on one or both of the negative DC bus or the positive DC bus. In the example illustrated, the current sensors 445 are shunt resistors connected in the power path. The voltage drop across the shunt resistors (i.e., the current sensors 445) is processed by electronics and then sampled by a current sense analog-to-digital converter (ADC) 455. The analog signal is converted to a digital signal and provided to the controller 300 for implementing motor control as further described below.

The controller 300 may execute a firmware that implements a field-oriented control (FOC) technique to control the motor 305. The controller 300 performs FOC of the motor 305 based on the position signals Ha, Hb, and Hc. The controller 300 generates PWM output signals using the FOC. The controller 300 sends the PWM control signals to the gate driver 450. The gate driver 450 interprets the PWM control signals into six separate voltage switching signals (Sa+, Sa-, Sb+, Sb-, Sc+, and Sc-). The switching signals are pulse width modulated (PWM) signals provided at a switching frequency to each of the WBS FETs. Each voltage switching signal is provided to a different half-bridge WBS FETs of the power switching network 350. The switching signal Sa+ corresponds to the WBS FETs 410. The switching signal Sa- corresponds to the WBS FETs 425. The switching signal Sb+ corresponds to the WBS FETs 415. The switching signal Sb- corresponds to the WBS FETs 430. The switching signal Sc+ corresponds to the WBS FETs 420. The switching signal Sb+ corresponds to the WBS FETs 435. Possible switching signal states are high and low. The WBS FET is conducting current from the power source 310 to the motor 305 for one state of the corresponding switching signal and not conducting current from the power source 310 to the motor 305 for the other complimentary switching state of the switching signal.

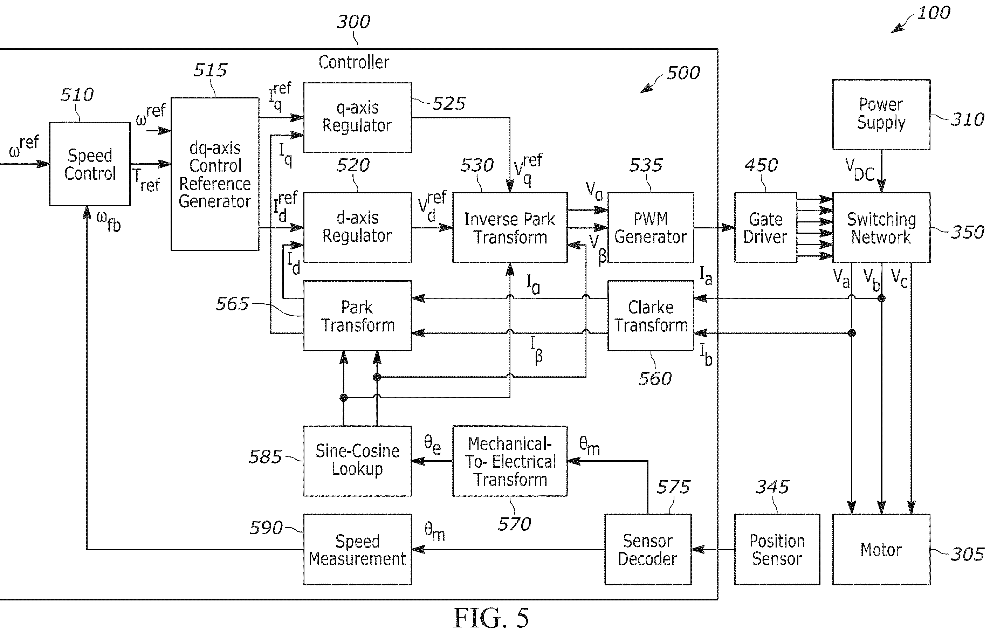

The controller 300 may use a controller topology 500 as shown in FIG. 5 to implement a FOC motor drive. The power tool 100 includes the power source 310, the gate driver 450, the power switching network 350, the motor 305, and the position sensor 345. The controller 300 receives the position signals and the current signals from the power tool (e.g., as described with respect to FIG. 4) and provides corresponding PWM control signals to the gate driver 450. The position sensor 345 is configured to sense the angular position of the rotor with respect to the stator. The position sensor 345 outputs the position signal to a sensor decoder 575. The sensor decoder 575 generates a mechanical motor angle (θₘ) based on the position signal. The sensor decoder 575 outputs the mechanical motor angle (θₘ) and timing measurements to a speed measurement block 590. The speed measurement block 590 calculates the speed of the rotor of the motor 305. The speed measurement block 590 calculates a motor speed signal (ω_{fb}) based on the mechanical motor angle (θₘ) and timing measurements. The speed measurement block 590 outputs the motor speed signal (ω_{fb}) to a speed control block 510. The speed control block 510 calculates the speed error (e.g., a difference) between the motor speed feedback signal (ω_{fb}) and a desired speed (ω_{ref}). The desired speed (ω_{ref}) is, for example, the speed command received from the variable speed trigger 320. The speed control block 510 calculates a speed error signal and generates a torque command (e.g., torque control signal (T_{ref})) based on the speed error.

The speed control block 510 outputs the torque control signal (T_{ref}) to a dq-axis control reference generator block 515. In some embodiments the dq-axis control reference generator may implement a Maximum-Torque-Per-Ampere (MTPA) control, a field weakening control, and/or the like. The dq-axis control reference generator block 515 calculates d-axis and q-axis currents to produce a desired torque and speed. The d-axis is the direct axis and corresponds to the direction of the rotor flux. The q-axis is the quadrature axis and corresponds to the axis leading the d-axis by 90 degree electrical. The q-axis corresponds to the torque- producing components of the motor 305. The dq-axis control reference generator block 515 generates a q-axis control current (I_{q}^{ref}) and a d-axis control current (I_{d}^{ref}) using the torque control signal (T_{ref}) and the desired speed (ω_{ref}). For example, the dq-axis control reference generator block 515 calculates the d-axis and q-axis control currents based on the desired speed, the torque control signal, the base speed of the motor, and the like. The dq-axis control reference generator block 515 outputs the q-axis control current (I_{q}^{ref}) to a q-axis regulator 525. The dq-axis control reference generator block 515 outputs the d-axis control current (I_{d}^{ref}) to a d-axis regulator 520. In combination, the speed control block 510, the dq-axis control reference generator block 515, the q-axis regulator 525, and the d-axis regulator 520 enable independent torque-speed control of the motor 305 unlike other motor drive techniques such as a trapezoidal commutated motor drive.

The sensor decoder 575 outputs the mechanical motor angle (θₘ) to a mechanical-to-electrical transform block 570. The mechanical-to-electrical transform block 570 transforms a mechanical rotor motor angle (θₘ) to an electrical rotor motor angle (θₑ). The mechanical-to-electrical transform block 570 outputs the electrical rotor motor angle (θₑ) to the sine-cosine lookup block 585. The sine-cosine lookup block 585 calculates the sine of the electrical rotor motor angle (θₑ) and the cosine of the electrical rotor motor angle (θₑ). The sine and cosine of the electrical rotor motor angle (θₑ) are each output to the Park transform block 565 and the inverse Park transform block 530.

In the example illustrated, the controller 300 receives two instantaneous line currents (Iₐ and I_{b}) from the power switching network 350. In other embodiments, a different set of line current may be received. Two phases of the three-phase motor 305 produce the two line currents (Iₐ and I_{b}). The Clarke transform block 560 transforms the line currents (Iₐ and I_{b}) into α-β coordinate system line currents (I_{α} and I_{β}). A α-β coordinate system is a simplified two-phase system for representation of the three-phase motor 305. The Clarke transform block 560 outputs the orthogonal currents (I_{α} and I_{β}) to a Park transform block 565. The Park transform block 565 receives the orthogonal line currents (I_{α} and I_{β}) and the sine and cosine signals from sine-cosine lookup block 585. The Park transform block 565 generates orthogonal d-axis and q-axis currents (I_{d} and I_{q}) based on the orthogonal line currents (I_{α} and I_{β}) and the sine and cosine signals. The Park transform block 565 outputs a q-axis current (I_{q}) and a d-axis current (I_{d}) to the q-axis regulator 525 and d-axis regulator 520, respectively.

The q-axis regulator 525 calculates an error between a desired q-axis current and an actual q-axis current. The q-axis regulator 525 receives the q-axis control current (I_{q}^{ref}) from the dq-axis control reference generator block 515. The q-axis regulator 525 also receives the q-axis current (I_{q}) from the Park transform block 565. The q-axis regulator 525 calculates the current error using the q-axis control current (I_{q}^{ref}) and the q-axis current (I_{q}). The q-axis regulator 525 corrects the calculated error using a proportional-integral (PI) controller. The q-axis regulator 525 outputs a q-axis voltage control signal (V_{q}^{ref}) to the inverse Park transform block 530. The d-axis regulator 520 operates similarly to the q-axis regulator 525 but instead in the d-axis. The d-axis regulator 520 receives the d-axis control current (I_{d}^{ref}) from the dq-axis control reference generator block 515. The d-axis regulator 520 receives the d-axis current (I_{d}) from the Park transform block 565. The d-axis regulator 520 calculates the current error using the d-axis control current (I_{d}^{ref}) and the d-axis current (I_{d}). The d-axis regulator 520 corrects the calculated error using a PI controller. The d-axis regulator 520 outputs a d-axis voltage control signal (V_{d}^{ref}) to the inverse Park transform block 530. The inverse Park transform block 530 converts the q-axis voltage control signal (V_{q}^{ref}) and the d-axis voltage control signal (V_{d}^{ref}) to simplified α-β orthogonal voltages (V_{α} and V_{β}). The inverse Park transform block 530 outputs the simplified α-β orthogonal voltages (V_{α} and V_{β}) to a PWM generator 535. The PWM generator 535 generates PWM control signals based on the input orthogonal voltage (V_{α} and V_{β}). The PWM generator 535 outputs the PWM control signals to the gate driver 450. The gate driver 450 transforms the PWM control signals into six separate voltage switching signals, i.e., PWM gate signals. The PWM signals have a frequency of at least 50 kHz. In some embodiments, the frequency of the PWM signals is less than 250 kHz.

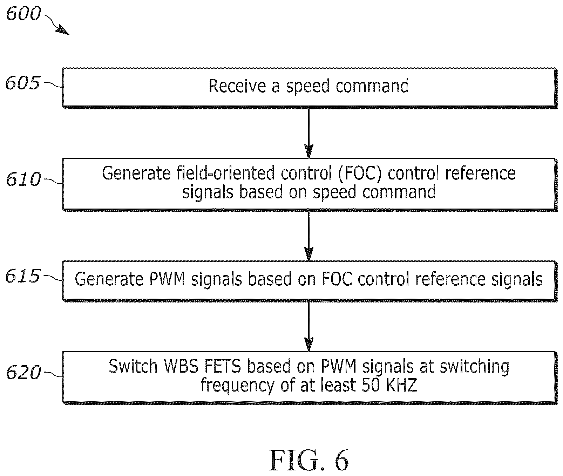

FIG. 6 is a flowchart of an example method 600 for controlling the motor 305. The method 600 may be implemented by the controller 300 using the controller topology 500 and is explained with respect to FIG. 5. However, the method 600 may be implemented in other ways than shown in FIG. 5. In the example illustrated, the method 600 includes receiving a speed command (at block 605). The speed command may be provided by user input, or example, via the variable speed trigger 320 or other speed setting mechanism. In some examples, the speed command may be provided by the controller 300 based on operation parameters and conditions of the power tool. When the speed command is received using the trigger 320, the trigger switch 315 converts the amount of trigger pull to a speed command and provides the speed command to the controller 300, for example, as speed reference.

The method 600 include generating FOC control reference signals based on the speed command (at block 610). With reference to FIG. 5, the speed control block 510 receives the speed command and generates the FOC torque reference signals (T_{ref}) based on the speed command. The speed control block 510 receives the current speed (e.g., present speed) of the motor from the speed measurement block 590 and generates the FOC torque reference signals to reduce the error between the speed command and the current speed of the motor. The dq-axis control reference generator block 515 receives the FOC torque reference signals and generates FOC current reference signals (I_{q}^{ref} and I_{d}^{ref}) based on the FOC torque reference signals. The dq-axis control reference generator block 515 receives speed command and generates the FOC current reference signals based on the speed command and the FOC torque reference signals.

In some examples, the controller 300 determines whether the speed command is above (e.g., equal to or greater than) the base speed of the motor 305. The base speed of the motor is defined as the maximum speed at which the motor can be operated at the rated torque of the motor. Above the base speed of the motor, the torque may be reduced to maintain the motor speed. The controller 300 compares the speed command to the base speed to determine whether the speed command is above the base speed. The base speed may be pre-stored in a memory of the controller 300.

The control method used to generate the FOC control reference signals may depend on whether the speed command is above or below the base speed of the motor 305. For example, the dq-axis control reference generator block 515 generates the FOC control reference signals using MTPA control when the speed command Is below the base speed of the motor 305. The torque of the motor may be reduced to maintain the motor speed above the base speed of the motor 305. The dq-axis control reference generator block 515 may generate the FOC control reference signals using field weakening control when the speed command is above the base speed of the motor 305.

The method 600 includes generating PWM control signals based on FOC control reference signals (at block 615). The FOC current reference signals are provided to the regulators 520, 525 to calculate the error between the FOC current reference signals and the measured current flow between the power switching network 350 and the motor 305. The PWM generator 535 receives the error signals and generates the PWM control signals based on the error signals. Specifically, the PWM control signals are generated to reduce the error to zero or near zero. The PWM control signals may be generated with a higher or lower duty ratio compared to previous PWM control signals based on the error signal.

The method 600 includes switching the WBS FETs 410-435 based on the PWM signals at a switching frequency of at least 50 kHz (at block 620). The WBS FETs are switched between a conducting state where the selected WBS FET conducts current between the power source and the motor 305 and a non-conducting state where the selected WBS FET does not conduct current (e.g., blocks current) between the power source and the motor 305. A PWM signal pin from the controller 300 (or the PWM generator 535) is connected to an input pin of the gate driver 450. The gate driver 450 receives the PWM control signals and translates the PWM control signals to gate driving signals for each of the FETs (or a pair of FETs depending on the configuration of the GaN FETs). The gate driving signals are provided to the WBS FETs 410-435. As noted above, the WBS FETs are switched at a switching frequency of at least 50 kHz (e.g., equal to or greater than 50 kHz).

Thus, various embodiments described herein provide for a wide bandgap motor drive with FOC for power tools. Various features and advantages are set forth in the following claims.

## Claims

1. A power tool comprising:
a motor;
a power input;
a power switching network electrically connected between the power input and the motor, the power switching network including a plurality of Wide Bandgap Semiconductors (WBS) field effect transistors (FETs); and
a controller electrically connected to the power switching network and configured to,
receive a speed command;
generate field-oriented control (FOC) control reference signals based on the speed command; and
generate pulse-width modulated (PWM) signals based on the FOC control reference signals, wherein the plurality of WBS FETs are switched between a conducting state and a non-conducting state based on the PWM signals at a switching frequency of at least 50 kHz.

2. The power tool of claim 1, wherein the plurality of WBS FETs includes Gallium Nitride (GaN) High Electron Mobility Transistors (HEMTs), and/or wherein the switching frequency is less than 250 kHz.

3. The power tool of claim 1 or 2, wherein the controller is further configured to:
determine a speed of the motor;
generate FOC torque reference signals based on the speed command and the speed of the motor; and
generate FOC current reference signals based on the FOC torque reference signals and the speed command, wherein the FOC control reference signals include the FOC current reference signals.

4. The power tool of claim 3, wherein the controller generates the FOC torque reference signals to reduce error between the speed command and the speed of the motor.

5. The power tool of one of claims 1-4, wherein the FOC control reference signals are generated based on maximum-torque-per-ampere control when the speed command is below a base speed of the motor, and wherein the FOC control reference signals are generated based on field weakening control when the speed command is above the base speed of the motor.

6. The power tool of one of claims 1-5, wherein a dead time between the conducting state and the non-conducting state of the plurality of WBS FETs is less than 100 nanoseconds and/or further comprising a of DC ceramic capacitor network connected across a DC bus of the power switching network.

7. A method for controlling a motor of a power tool, the method comprising:
receiving, using a controller of the power tool, speed command;
generating, using the controller, field-oriented control (FOC) control reference signals based on the speed command;
generating, using the controller, pulse-width modulated (PWM) signals based on the FOC control reference signals; and
switching a plurality of Wide Bandgap Semiconductors (WBS) field effect transistors (FETs) of a power switching network electrically connected between a power input of the power tool and a motor of the power tool, the plurality of WBS FETS being switched between a conducting state and a non-conducting state based on the PWM signals at a switching frequency of at least 50 kHz.

8. The method of claim 7, wherein the switching frequency is less than 250 kHz.

9. The method of claim 7 or 8, further comprising:
determining a speed of the motor;
generating, using the controller, FOC torque reference signals based on the speed command and the speed of the motor; and
generating, using the controller, FOC current reference signals based on the FOC torque reference signals and the speed command, wherein the FOC control reference signals include the FOC current reference signals.

10. The method of claim 9, wherein the FOC torque reference signals are generated to reduce error between the speed command and the speed of the motor.

11. The method of claim 9 or 10, wherein a dead time between the conducting state and the non-conducting state of the plurality of WBS FETs is less than 100 nanoseconds and/or wherein the plurality of WBS FETs includes Gallium Nitride (GaN) High Electron Mobility Transistors (HEMTs).

12. The method of one of claims 7-11, wherein the FOC control reference signals are generated based on maximum-torque-per-ampere control when the speed command is below a base speed of the motor, and wherein the FOC control reference signals are generated based on field weakening control when the speed command is above the base speed of the motor.

13. A power tool comprising:
a power input;
a variable speed trigger;
a motor including a speed sensor;
a power switching network electrically connected between the power input and the motor and including a plurality of Gallium Nitride (GaN) High Electron Mobility Transistors (HEMTs); and
a controller electronically connected to the power switching network and configured to
receive, via the variable speed trigger, a speed command; determine, using the speed sensor, a motor speed;
generate FOC control reference signals based on the speed command and the motor speed; and
generate pulse-width modulated (PWM) signals based on the FOC control reference signals, wherein the plurality of GaN HEMTs are switched between a conducting state and a non-conducting state based on the PWM signals at a switching frequency of at least 50 kHz.

14. The power tool of claim 13, wherein the switching frequency is less than 250 kHz and/or wherein the FOC control reference signals are generated based on maximum-torque-per-ampere control when the speed command is below a base speed of the motor, and wherein the FOC control reference signals are generated based on field weakening control when the speed command is above the base speed of the motor.

15. The power tool of claim 13 or 14, wherein a dead time between the conducting state and the non-conducting state of the plurality of GaN HEMTs is less than 100 nanoseconds and/or further comprising a DC ceramic capacitor network connected across a DC bus of the power switching network.
